# EUROPÄISCHE PATENTSCHRIFT

(11) **EP 2 092 863 B1**
(45) Veröffentlichungstag und Bekanntmachung des Hinweises auf die Patenterteilung: **11.07.2012**
(21) Anmeldenummer: 09161109.5
(22) Anmeldetag: 05.02.2008
(51) Int. Cl.: A47J 31/54, F24H 9/20

(54) **Durchlauferhitzer**
Percolator
Chauffe-eau instantané

(30) Priorität: 27.02.2007 DE 202007002963 U
(43) Veröffentlichungstag der Anmeldung: 26.08.2009
(62) Teilanmeldung aus: 08101284.1
(73) Patentinhaber: MELITTA HAUSHALTSPRODUKTE GmbH & Co. Kommanditgesellschaft, D-32427 Minden (DE)
(72) Erfinder: Sachtleben, Andreas, 32427, Minden (DE); Chuen, Wong Yat, Hung Hom, Kowloon, Hong Kong (HK)
(74) Vertreter: Dantz, Jan Henning

(56) Entgegenhaltungen:
- EP-A- 0 881 859
- DE-A1- 2 552 625
- DE-A1- 4 023 920
- DE-A1- 4 240 840
- FR-A- 2 530 110

## Beschreibung

Die vorliegende Erfindung betrifft einen Durchlauferhitzer, insbesondere für Kaffeemaschinen, mit einem Fluid führenden Rohr aus einem wärmeleitfähigen Material, das mit einem Heizelement verbunden ist.

Es sind Durchlauferhitzer für Kaffeemaschinen bekannt, bei denen das Brühwasser in einem Heizrohr über ein benachbart angeordnetes rohrförmiges Heizelement aufgeheizt wird und dann über eine Brause im erhitzten Zustand ausgegeben wird. Um eine Überhitzung zu vermeiden, ist an dem Heizrohr ein Thermostat mit einer Kontaktplatte angebracht, wobei für die Montage das runde Heizrohr entweder mit einer angeschweißten Lasche versehen oder verprägt wird, um eine ausreichend ebene Verbindung mit der Kontaktplatte zu erhalten. Dieser zusätzliche Arbeitsgang des Verschweißens oder Verprägens ist einerseits aufwendig und andererseits führt dies dazu, dass ungenügend ebene Anlageflächen vorhanden sind/entstehen. Zudem ist die Energiespeicherkapazität der vorbekannten Durchlauferhitzer begrenzt.

Die EP 881 859 offenbart einen Durchlauferhitzer, bei dem eine Rohrleitung in einem Heizelement eingebettet ist. Das Heizelement wird über eine elektische Heizeinrichtung erhitzt. Zur Steuerung ist der Körper des Heizelements über eine Lasche mit einem Thermostaten gekoppelt.

Ferner offenbart die DE 40 23 920 einen Durchlauferhitzer für eine Maschine zur Herstellung von Brühgetränken mit einem elektrisch betriebenen Heizkörper, der ein zum Aufheizen eines Wasserrohres dient. Wasserrohr und Heizkörper sind für eine gute Wärmeleitfähigkeit über Stege miteinander verbunden.

Es ist daher Aufgabe der vorliegenden Erfindung einen Durchlauferhitzer zu schaffen, der einfach herstellbar ist und die Wärmeenergie optimal nutzt.

Diese Aufgabe wird mit einem Durchlauferhitzer mit den Merkmalen des Anspruches 1 gelöst.

Gemäß der erfindungsgemäßen Ausgestaltung ist an dem Heizelement auf der zu dem Fluid führenden Rohr gewandten Seite in einen Abstand zu dem Verbindungsteg eine Materialverdickung als Energiespeicher vorgesehen. Dadurch können die Heizintervalle des Heizelementes verlängert werden, was die Lebensdauer verlängert.

Vorzugsweise ist durch die Materialverdickung an dem Heizelement an einer Seite eine ebene Fläche ausgebildet, die sich parallel zu einer ebenen Fläche an dem Fluid führenden Rohr mit dem Thermostaten erstreckt, insbesondere können die beiden ebenen Flächen zudem auf einer gemeinsamen Ebene angeordnet sein.

Vorzugsweise weist das Fluid führende Rohr eine ebene Fläche auf, an der ein Thermostat montiert ist. Dadurch kann der Durchlauferhitzer montiert werden, ohne dass der Arbeitsschritt des Verprägens des Heizrohres vorgenommen werden muss, da die ebene Fläche schon bei der Herstellung beim Extrudieren des Rohres vorgesehen wird.

Gemäß einer bevorzugten Ausführungsform ist die ebene Fläche an einer Innenseite des bogenförmig gekrümmten Durchlauferhitzers angeordnet, so dass auch der Thermostat innen angeordnet ist und ein kompakter Aufbau gewährleistet wird. Die ebene Fläche kann dabei durch zwei im Eckbereich angeordnete Materialverdickungen gebildet sein, so dass diese Materialverdickungen als zusätzlicher Energiespeicher zur Verfügung stehen. Ferner kann das Fluid führende Rohr benachbart zu der ebenen Fläche und den Materialverdickungen mit gleichmäßiger Wandstärke im Querschnitt ringförmig ausgebildet sein, so dass das Rohr noch biegbar bleibt und der Materialaufwand begrenzt ist.

Gemäß einer bevorzugten Ausgestaltung der Erfindung sind das Fluid führende Rohr sowie ein Gehäuse des Heizelementes über einen Verbindungssteg miteinander verbunden, so dass eine gute Wärmeleitfähigkeit gewährleistet ist. Dabei können das Fluid führende Rohr und das Gehäuse des Heizelementes integral aus einem Metall, vorzugsweise aus extrudiertem Aluminiumprofil, hergestellt sein. Dadurch kann die Einheit aus Heizelement und Fluid führendem Rohr besonders einfach montiert werden.

Die Erfindung wird nachfolgend anhand eines Ausführungsbeispieles mit Bezug auf die beigefügten Zeichnungen näher erläutert. Es zeigen:

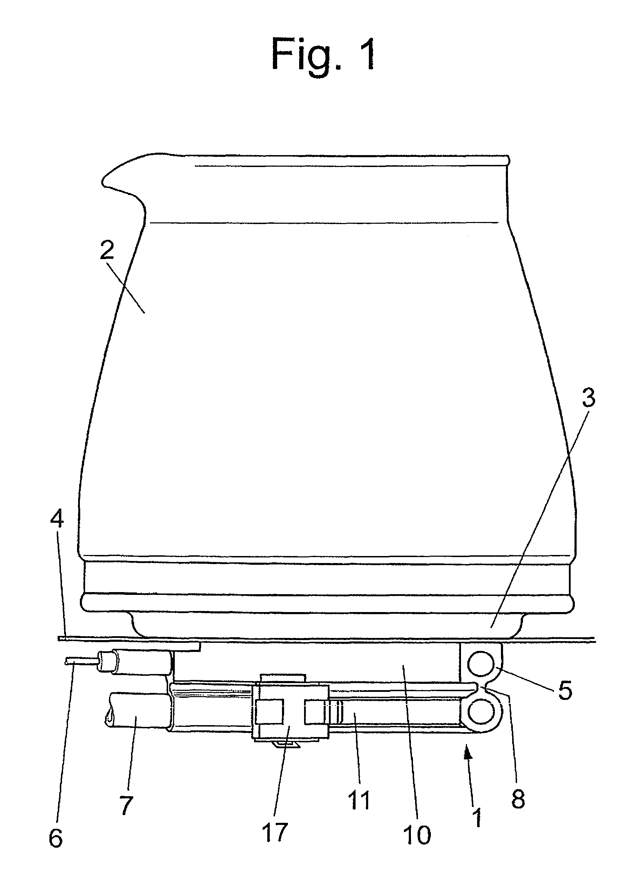

- Figur 1: eine Seitenansicht eines erfindungsgemäßen Durchlauferhitzers im montierten Zustand;
- Figur 2: eine Detailansicht der Einheit des Heizelementes und des Fluid führenden Rohres im Schnitt, und
- Figur 3: eine Detailansicht eines Thermostaten an dem Fluid führenden Rohr.

An einem Durchlauferhitzer 1 ist eine Kanne 2 zum Warmhalten eines Brühgetränkes, insbesondere Kaffee vorgesehen, die mit einem Boden 3 auf einer Warmhalteplatte 4 abgestellt ist. Unterhalb der Warmhalteplatte 4 ist ein Körper 5 mit einem Heizelement 6 und einem Fluid führenden Rohr 7 angeordnet, die über einen integral ausgebildeten Verbindungssteg 8 miteinander verbunden sind. Der Körper 5 bildet zudem einen Wärmeleiter und Energiespeicher, so dass beim Aufheizen des Heizelementes 6 zum Erwärmen von Wasser in dem Fluid führenden Rohr 7 gleichzeitig auch die Warmhalteplatte 4 erhitzt wird. Der Körper 5 ist dabei bogenförmig in Form eines Hufeisens ausgebildet und ist zumindest in dem Bereich unterhalb der Warmhalteplatte 4 angeordnet. Auch eine mäanderförmige Gestaltung des Körpers 5 ist möglich.

Der Körper 5 ist aus einem extrudierten Aluminiumprofil hergestellt, das zunächst als gerades Profil hergestellt und anschließend gebogen wird.

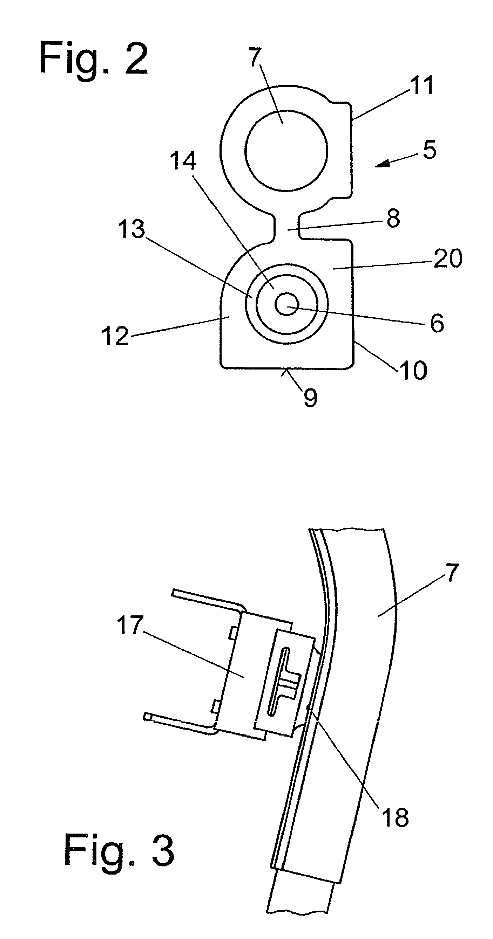

In Figur 2 ist der Körper 5 im Querschnitt dargestellt. Das Heizelement 6 ist aus einem Widerstandsdraht gebildet, der von einer Isolierung 14 und einer Ummantelung 13, vorzugsweise einem Kupferrohr umgeben ist. Über das Heizelement 6 wird Wärme an ein Gehäuse 12 abgegeben, das durch den Körper 5 gebildet ist.

An der zu dem Fluid führenden Rohr 7 abgewandten Seite des Heizelementes 6 ist eine ebene Fläche 9 ausgebildet, an der die Warmhalteplatte 4 anliegt.

An dem Heizelement 6 ist ferner auf der zu dem Fluid führenden Rohr 7 gewandten Seite eine Materialverdickung 20 als Energiespeicher vorgesehen. Durch die Materialverdickung 20 wird auf einer Innenseite des Körpers 5 eine ebene Fläche 10 ausgebildet.

Ferner ist an dem Körper 5 benachbart zu dem Fluid führenden Rohr 7 eine weitere ebene Fläche 11 ausgebildet. An der ebenen Fläche 11 ist ein Thermostat 17 montiert, der mit einer ebenen Platte 18 an der Fläche 11 anliegt. Wenn das Heizelement 6 erhitzt wird, erwärmt sich der Körper 5 und Wärmeenergie wird über den Verbindungssteg 8 zu dem Fluid führenden Rohr 7 geleitet. Wenn in dem Fluid führenden Rohr 7 kein Wasser zur Kühlung vorhanden ist, muss dafür gesorgt werden, dass der Durchlauferhitzer nicht weiter aufgeheizt wird. Hierfür dient der Thermostat 17, der ein Bi-Metallelement enthält, das bei Erreichen einer bestimmten Temperatur sich selbständig mechanisch verformt. Diese Verformung wird dazu genutzt, den Stromkreis zu trennen. Bei Überschreiten einer vorbestimmten Temperatur wird somit das Heizelement 6 abgeschaltet, bis durch eine Abkühlung wieder eine Rückverformung des Bi-Metallelementes stattgefunden hat.

In dem gezeigten Ausführungsbeispiel ist das Heizelement 6 zwischen der Warmhalteplatte 4 und dem Fluid führenden Rohr 7 angeordnet. Es ist natürlich auch möglich, statt das Heizelement 6 und das Rohr 7 nicht vertikal übereinander sondern horizontal nebeneinander anzuordnen.

Das Heizelement 6 umfasst als ergänzenden Wärmespeicher eine Materialverdickung 20 benachbart zu dem Fluid führenden Rohr 7. Natürlich ist es möglich, auch mehrere Materialverdickungen in Form von Rippen etc. an dem Gehäuse 20 des Heizelements 6 vorzusehen.

## Patentansprüche

1. Durchlauferhitzer, insbesondere für Kaffeemaschinen, mit einem extrudierten Körper (5) mit einem Heizelement (6) und einem Fluid führenden Rohr (7) aus einem wärmeleitfähigen Material, die über einen integral ausgebildeten Verbindungssteg (8) miteinander verbunden sind, **dadurch gekennzeichnet, dass** an dem Heizelement (6) auf der zu dem Fluid führenden Rohr (7) gewandten Seite in einem Abstand zu dem Verbindungssteg (8) eine Materialverdickung (20) als Energiespeicher vorgesehen ist.

2. Durchlauferhitzer nach Anspruch 1, **dadurch gekennzeichnet, dass** das Fluid führende Rohr (7) eine ebene Fläche (11) aufweist, an der ein Thermostat (17) montiert ist.

3. Durchlauferhitzer nach Anspruch 2, **dadurch gekennzeichnet, dass** durch die Materialverdickung (20) eine ebene Fläche (10) gebildet ist, die sich parallel zu einer ebenen Fläche (11) an dem Fluid führenden Rohr (7) mit dem Thermostaten (17) erstreckt.

4. Durchlauferhitzer nach Anspruch 3, **dadurch gekennzeichnet, dass** die ebene Fläche (10) durch die Materialverdickung (20) an dem Heizelement (6) und die ebene Fläche (11) mit dem Thermostaten (17) auf einer Ebene angeordnet sind.

5. Durchlauferhitzer nach einem der Ansprüche 2 bis 4, **dadurch gekennzeichnet, dass** die ebene Fläche (11) an einer Innenseite des bogenförmig gekrümmten Durchlauferhitzers (1) angeordnet ist.

6. Durchlauferhitzer nach einem der Ansprüche 2 bis 5, **dadurch gekennzeichnet, dass** die ebene Fläche (11) durch zwei im Eckbereich angeordnete Materialverdickungen gebildet ist und das Fluid führende Rohr (7) benachbart zu der ebenen Fläche (11) und den Materialverdickungen mit gleichmäßiger Wandstärke im Querschnitt ringförmig ausgebildet ist.

7. Durchlauferhitzer nach einem der Ansprüche 1 bis 6, **dadurch gekennzeichnet, dass** das Fluid führende Rohr (7) sowie ein Gehäuse (12) des Heizelements (6) über den Verbindungssteg (8) miteinander verbunden sind und das Fluid führende Rohr (7) und das Gehäuse (12) des Heizelementes (6) integral aus Metall, vorzugsweise aus Aluminium hergestellt sind.

## Claims

1. Throughflow heater, particularly for coffee machines, with an extruded body (5) with a heating element (6) and a pipe (7) of thermally conductive material conducting a fluid, which are connected together by an integrally formed connecting web (8), **characterised in that** a material thickening (20) is provided as an energy store at the heating element (6) on the side, which faces the pipe (7) conducting the fluid, at a spacing from the connecting web (8).

2. Throughflow heater according to claim 1, **characterised in that** the fluid-conducting pipe (7) has a planar surface (11) on which a thermostat is mounted.

3. Throughflow heater according to claim 2, **characterised in that** a planar surface (10) is formed by the material thickening (20) and extends parallelly to a planar surface (11) at the fluid-conducting pipe (7) with the thermostat (17).

4. Throughflow heater according to claim 3, **characterised in that** the planar surface (10) due to the material thickening (20) at the heating element (6) and the planar surface (11) with the thermostat (17) are arranged in one plane.

5. Throughflow heater according to any one of claims 2 to 4, **characterised in that** the planar surface (11) is arranged at an inner side of the arcuately curved throughflow heater (1).

6. Throughflow heater according to any one of claims 2 to 5, **characterised in that** the planar surface (11) is formed by two material thickenings arranged in the corner region and the fluid-conducting pipe (7) adjacent to the planar surface (11) and the material thickenings is of annular construction with uniform wall thickness in cross-section.

7. Throughflow heater according to any one of claims 1 to 6, **characterised in that** the fluid-conducting pipe (7) as well as a housing (12) of the heating element (6) are connected together by way of a connecting web (8) and the fluid-conducting pipe (7) and the housing (12) of the heating element (6) are produced integrally from metal, preferably from aluminium.

## Revendications

1. Chauffe-eau instantané, en particulier pour des machines à café comportant un corps extrudé (5) avec un élément chauffant (6) ainsi qu'un tube (7) de transfert d'un fluide réalisé en un matériau conducteur de la chaleur, qui sont reliés par une entretoise de liaison (8) réalisée intégralement,
**caractérisé en ce qu'**
il est prévu, sur l'élément chauffant (6), sur la face de cet élément tournée vers le tube (7) de transfert du fluide, à distance de l'entretoise de liaison (8), un épaississement de matière (20) constituant un accumulateur d'énergie.

2. Chauffe-eau instantané conforme à la revendication 1,
**caractérisé en ce que**
le tube (7) de transfert du fluide comporte une surface plane (11) sur laquelle est monté un thermostat (17).

3. Chauffe-eau instantané conforme à la revendication 2,
**caractérisé en ce que**
l'épaississement de matière (20) forme une surface plane (10) qui s'étend parallèlement à la surface plane (11) formée sur le tube (7) de transfert du fluide sur laquelle est monté le thermostat (17).

4. Chauffe-eau instantané conforme à la revendication 3,
**caractérisé en ce que**
la surface plane (10) de l'épaississement de matière (20) de l'élément chauffant (6) et la surface plane (11) sur laquelle est monté le thermostat (17) sont situées dans un même plan.

5. Chauffe-eau instantané conforme à l'une des revendications 2 à 4,
**caractérisé en ce que**
la surface plane (11) est disposée sur une face interne du chauffe-eau instantané (1) cintrée en forme d'arc.

6. Chauffe-eau instantané conforme à l'une des revendications 2 à 5,
**caractérisé en ce que**
la surface plane (11) est formée par deux épaississements de matière situés dans une zone de coin, et le tube de transfert du fluide (7) a, au voisinage de la surface plane (11) et des épaississement de matière une forme de section annulaire avec une épaisseur de paroi régulière.

7. Chauffe-eau instantané conforme à l'une des revendications 1 à 6,
**caractérisé en ce que**
le tube (7) de transfert du fluide ainsi qu'un botter (12) de l'élément chauffant (6) sont relié par une entretoise de liaison (8) et le tube (7) de transfert du fluide et le boitier (12) de l'élément chauffant (6) sont intégralement réalisés en métal, de préférence en aluminium.
